Europäisches Patentamt

European Patent Office

Office européen des brevets

(19)

(11) Publication number: **0 176 228 B1**

# (12) EUROPEAN PATENT SPECIFICATION

(45) Date of publication of patent specification: **14.08.91**   (51) Int. Cl.⁵: **C09D 11/02**

(21) Application number: **85305977.2**

(22) Date of filing: **22.08.85**

(54) Hot melt impulse ink jet ink.

(30) Priority: **27.08.84 US 644542**

(43) Date of publication of application:
**02.04.86 Bulletin 86/14**

(45) Publication of the grant of the patent:
**14.08.91 Bulletin 91/33**

(84) Designated Contracting States:
**BE CH DE FR GB IT LI LU NL SE**

(56) References cited:
**EP-A- 0 099 682**
**JP-A-55 054 368**
**US-A- 3 715 219**

(73) Proprietor: **DATAPRODUCTS CORPORATION**
**6200 Canoga Avenue**
**Woodland Hills California 91365(US)**

(72) Inventor: **Cooke, Theodore Michael**
**25 Washington Avenue**
**Danbury Connecticut 06804(US)**
Inventor: **Lin, An-Chung Robert**
**1 Patricia Lane**
**New Town Connecticut 06470(US)**

(74) Representative: **Stanley, David William et al**
**APPLEYARD LEES & CO. 15 Clare Road Halifax**
**West Yorkshire HX1 2HY(GB)**

## Description

The present invention relates to the field of ink jet inks which are used in impulse (drop-on-demand) types of ink jet printers. More particularly, the present application relates to such ink jet inks which exhibit good crack and smear resistances, are heat stable, and are easily jettable using drop-on-demand type apparatus.

Originally, printing with hot melt type ink was suggested in connection with electrostatic printing apparatuses. In U.S. Patent 3,653,932 (Berry et al), entitled "Electrostatic Printing Composition Comprising Didodecyl Sebacate", an electrostatic printing process is disclosed using an ink comprised of one or more of specified di-esters. In the Berry process, ink is heated into a fluid phase and is caused to form a convex meniscus at the nozzle tip by hydrostatic pressure. This pressure causes the end of the ink to intrude into an electrostatic field. Ink is then electrostatically drawn into a single file stream of drops which traverses the span between the tip of the nozzle and the carrier. The preferred inks for use in this process are di-esters of sebacic acid which have been esterified with alcohols of paraffins having 12 or less carbon atoms in their chains. Each of the preferred inks is disclosed as having a melting point "which does not exceed about 51ºC and a freezing point which is not below 30ºC", to ensure that the ink will be in a liquid phase at the operating temperature of the exemplary reservoir, namely, about 56º ± 3ºC, and that it "will be solid at generally encountered room temperatures to minimize its flow from the carrier".

U.S. Patent No. 3,715,219 (Kurz et al) discloses a similar electrostatic printing process using an ink composition comprising about 3% by weight of a dye, and the remainder a vehicle comprised at least one alcohol of the paraffin series which has the general formula $CH_3(CH_2)_nCH_2OH$, in which n is integer between 12 and 16. According to Kurz, the preferred hot melt type inks have melting points which do not exceed about 61ºC and freezing points which are not below about 30ºC. During the process, ink in a fluid phase is supplied at a constant flow rate from a source represented by supply tube 10 to reservoir 11 which terminates in a nozzle 12 with a capillary bore. The chamber 11 of the exemplary apparatus is maintained at a temperature in the range of about 62ºC and 82ºC during the disclosed process. Viscosity of the disclosed inks are said to be within a range having an upper limit of 50 $\times 10^{-3}$Pa.s. at operating temperatures, the exemplary inks in the Kurz et al references having viscosities of between 4.0-5.9 at 80ºC.

More recently, impulse ink jet printing processes using hot melt inks have been disclosed. Impulse ink jet printing differs from electrostatic printing in that individual droplets are discharged from a printing head in response to relatively low pressures which are typically achieved using piezoelectric head elements. Unlike electrostatic printing processes, such drop on demand processes produce much larger droplets which decelerate, not accelerate, as they move towards the carrier.

One recent hot impulse ink jet hot melt ink is disclosed in U.S. Patent No. 4,390,369 (Merritt et al), entitled "Natural Wax-Containing Ink Jet Inks". This patent discloses the use of a number of natural waxes, such as Japan wax, candelilla wax, carnauba wax, etc. These waxes may be used at percentages of from 0.5 to 97.0% by weight either as the basic fluid vehicle of the ink or as an additive to other fluidic vehicles such as fatty acids, more particularly oleic acid or oleic acid with benzyl ether. Merritt et al disclose a number of such inks having viscosities of 6.7 to 15.7 at 165ºF (about 74ºC).

In related European Publication 99682 A2 a number of hot melt impulse ink jet inks are disclosed which are described as being solid or semi-solid at ambient temperature. The preferred ink is disclosed as comprising stearic acid in an approximate weight range from 50 to 99%. As explained in that application, commercially available stearic acids are produced from saponified and distilled animal fats, usually being composed of 60% liquid and 40% solid acid, the bulk of the liquid acids being separated from the solid acids by hydraulic pressing to produce, for example, single-pressed, double-pressed, triple-pressed stearic acids etc. According to the Handbook of Chemistry and Physics (49th Edition), chemically pure stearic acid is octadecanoic acid $(CH_3)(CH_2)_{16}CO_2H$ (melting point 70.1ºC). In addition to stearic acid, the said publication discloses that additives such as oleic acid, typophor black, nigrosine base, benzyl ether, compounded or chemically modified waxes (including natural or other synthetic substances), a coloring agent or dye, such as oil or solvent soluble dye, etc. may be used in formulated the disclosed hot melt inks.

Applicants have found that stearic acid containing inks exhibit very good jettability, good heat stability (3-5 days at 120ºC, projected to be 20-30 days at 90˚C), good material compatibility, and smearing and cracking behavior which is comparable to or slightly worse than that of an IBM photocopy. One such hot melt ink jet ink comprises 97% stearic acid and 3% nigrosine base. This ink exhibits viscosities of 11.0 $\times 10^{-3}$Pa.s.at 75˚C, and 9.0 $\times 10^{-3}$Pa.s. at 85˚C. Its surface tension is 28.9 dynes/cm at 80˚C, and its melting point is approximately 145˚F (62.7˚C). Applicants have noticed, however, that stearic acid inks, due to their vapor pressures at higher temperatures, may tend to produce snow-like condensates on the interior parts of the printing mechanisms with which they are used.

Notwithstanding the advances which have been in the art of hot melt ink jet ink printing, a need still exists for inks which are impulse jettable, heat stable, material compatible (especially with the coloring agents employed), and which exhibit good print qualities, particularly good resistances to smearing and cracking.

The formulation of high quality impulse ink jet inks requires the balancing of many important factors. For example, hot melt inks which have relatively low melting points are typically susceptible to smearing. As the melting points of those inks are increased, smearing resistance is improved, but the viscosity increases. While the viscosity of many inks can be reduced to a jettable range by increasing the temperatures at which they are jetted, higher jetting temperatures bring with them heat stability problems which can lead to the decomposition of the subject inks when heated over long periods of time in typical drop on demand type printers.

For example, the aforementioned U.S. Patent 3,715,219 describes compositions having a preferred melting point which does not exceed about 61°C and a freezing point which is not below about 30°C. In view of the low melting points of these compositions (Example III reporting the highest at 58°C), such inks are notoriously subject to smudging. This is a direct consequence of the relative softness of such materials at room temperature. It would be desirable to use materials which generally have melting points of at least 65°C, as these would clearly be solids at room temperature. Many of the compositions as suggested by U.S. Patent 3,715,219, in contrast, would probably best be described as semi-solids.

Similarly, Japanese Patent Application No. 55-54368 appears broadly to suggest a wide range of media for use as solvents to disperse or dissolve a "recording ingredient" and thereby form a "normal temperature, solid type recording medium". Table 1 illustrates concrete examples of desirable organic compounds, including a number of "alcohols". However, it is to be noted that all illustrated compounds are complex mono- and polycyclic systems and/or are polyhydric (i.e., contain more than 1 hydroxyl group).

The present invention provides in one aspect, a hot melt impulse ink jet ink, comprising:
(a) 0.1-10 wt% coloring agent; and
(b) a vehicle for carrying said coloring agent in said ink, comprising:
 (i) 30-100 wt% of $C_{20-24}$ acid(s);
 (ii) 0-30 wt% of $C_{14}$-$C_{19}$ acid(s) or alcohol(s);
 (iii) 0-50 wt% of ketone(s) having melting point(s) of 65-120°C, or 0-70 wt% of wax(es) having a melting point of at least 65°C; and
 (iv) 0-4 wt% of plasticizer(s);
said ink being solid at room temperature.
Aliphatic acids, alcohols and ketones are the preferred type.

In another aspect the invention provides a hot melt impulse ink jet ink, comprising:
(a) 0.1 to 10 wt% coloring agent; and
(b) a major proportion by weight of a vehicle for carrying the coloring agent in the ink, which vehicle essentially comprises:
 (i) 30 to 100 wt% of $C_{20-24}$ acid(s), preferably aliphatic;
 (ii) 0 to 30 wt% of $C_{14}$-$C_{19}$ acid(s) or alcohol(s), preferably aliphatic;
 (iii) 0 to 50 wt% of ketone(s), preferably aliphatic, having melting point(s) of 65 to 120°C, or 0 to 70 wt% of wax(es) having a melting point of at least 65°C; and
 (iv) 0 to 4 wt% of plasticizer(s);
said ink being solid at room temperature and preferably having a viscosity of up to $1.4 \times 10^{-2}$ Pa.s (14 centipoises) at 80°C.

By major proportion by weight is meant more than 50 wt% of the total ink.

In a further aspect the invention provides a method of ink jet printing comprising:
(a) heating an ink according to the invention to at least 80°C;
(b) discharging droplets of said ink at said temperature from an impulse ink jet towards a print substrate; and
(c) allowing said ink to solidify upon impact with said substrate to form print thereon.

The coloring agent may be a dye, for example nigrosine base. The preferred amount of coloring agent present is 1 to 5 wt%, more especially 2 to 3 wt%.

The plasticizer is preferably present in an amount of 2 to 3 wt%. The plasticizer assists prevention of cracking and smearing of the ink upon solidification of it on the substrate employed in printing. The plasticizer employed preferably has a melting point of 80-120°C. An acrylic resin is one suitable plasticizer.

The ink should preferably comprise at least 86 wt% of the vehicle; the ink therefore preferably containing from 86 to 99.9 wt% of the vehicle. The vehicle preferably comprises 40-90, more preferably 50-70 wt% of said $C_{20}$-$C_{24}$ acid(s).

The preferred inks of the present invention have a melting point of at least 65°C, and satisfy the aforementioned viscosity requirements within the 80-90°C range of intended operating temperatures.

In addition to the $C_{20}$-$C_{24}$ component the inks may also comprise minor proportions of shorter chain acids or alcohols in the $C_{14}$-$C_{19}$ range, preferably aliphatic. Such shorter chain acids are generally present because commercial grades of acids such as behenic acid comprise such materials.

Commercial grade behenic acid, which comprises approximately 70 % $C_{20}$-$C_{24}$ acids (most of the remainder being stearic acid) has been found to be a suitable primary component for an impulse ink jet vehicle due to its heat stability and compatibility with colorants, such as nigrosine base. As a relatively higher molecular weight material, however $C_{20}$-$C_{24}$ acids are somewhat more prone to cracking than their lower molecular weight counterparts. Moreover, in order to achieve good jettability with state of the art printers, inks of the present invention should preferably exhibit viscosities of no more than about 14 $\times 10^{-3}$Pa.s. at 80°C, such that they may be jetted at operating temperatures of between 80 and 90°C.

When commercial grades of behenic acids are employed, the vehicle may contain lesser amounts of $C_{14}$-$C_{19}$ acid(s) or alcohol(s), once again with acids being preferred over alcohols. In any event, it is preferred that the weight of the $C_{20}$-$C_{24}$ component of the vehicle be at least 150%, and preferably twice, the weight of the $C_{14}$-$C_{19}$ component of the vehicle.

One preferred ink of the present invention consists of about 80 wt% of a commercial behenic acid product (Hydrofol 2260); 15 wt% stearone; 3% of a dye, such as nigrosine base; and 2% plasticizer (acrylic resin, Acryloid DM-55).

As said ketone for use in the inks of the invention, stearone is preferred. Stearone is 18-pentatriacontanone and has a melting point of 87.8°C. Another suitable ketone is laurone. The ketone(s) will have a melting point of from 65 to 120°C, normally 80 to 120°C and preferably 80 to 110°C. This assists in plasticizing the ink on hardening and may also assist solubility of the coloring agent and gives good heat stability.

As an alternative, the vehicle may comprise 0 to 70 wt% of waxes, such as candelilla wax, which melt at or above 65°C. A preferred wax-containing vehicle comprises 20-25 wt% $C_{20}$-$C_{24}$ acid(s); 5-15 wt% $C_{14}$-$C_{19}$ acid(s); and 65-70 wt% candelilla wax. Other suitable waxes include bamboo leaf, certain beeswaxes, caranda, carnauba, hydrogenated castor oil, Chinese insect, cotton, cranberry, certain Douglas-fir bark, esparto, certain flax, Indian corn, Madagascar, most microcrystalline waxes, montan, ouricury, ozocerite, palm, peat wax, rice bran, shellac wax, sisal hemp, sorghum grain, Spanish moss, and refined sugar cane waxes.

The invention will now be illustrated by reference to the following non-limitative examples:-

Example 1

An experimental impulse ink jet ink was prepared consisting of 97 wt% Hydrofol 2260 and 3% Calco nigrosine base. Hydrofol is a commercially available grade of behenic acid having the following molecular weight distribution:

| Carbon Number | Percent |
|:---:|:---:|
| $C_{14}$ | 0.12 |
| $C_{16}$ | 1.30 |
| $C_{18}$ | 28.47 |
| $C_{20}$ | 8.50 |
| $C_{22}$ | 59.77 |
| $C_{24}$ | 1.34 |

The resulting ink was found to have a viscosity of 11.4° $\times 10^{-3}$Pa.s. at 85°C, and 8.7 $\times 10^{-3}$Pa.s. at 95°C. In this and the following examples, the ink was tested for jettability using the same type ink jet apparatus. The ink of this example could be jetted acceptably, but was unacceptable due to its cracking characteristics.

Example 2

EP 0 176 228 B1

An impulse ink jet ink was prepared using 95% Hydrofol, 3% Calco nigrosine base, and 2% of an acrylic resin plasticizer sold under the trade name Acryloid DM-55, which is available for purchase from the Rohm & Haas Company, Philadelphia, PA. The resulting ink was jettable, but also exhibited unacceptable cracking.

Example 3

An impulse ink jet ink was prepared from 93% Hydrofol, 4% Acryloid DM-55 and 3% Calco nigrosine base. The resulting ink, which had a viscosity of 14.5-15 x10$^{-3}$Pa.s. at 80°C was considered to have too high a viscosity for jetting using the above-mentioned device.

Example 4

An impulse ink jet ink comprising 78% Hydrofol, 15% stearone, 4% Acryloid DM-55 and 3% Calco nigrosine base was formulated, and found to have a viscosity of 15.2 x10$^{-3}$Pa.s. at 80°C.

Example 5

An impulse ink jet ink (sample 4l) was formulated having 80% Hydrofol, 15% stearone, 2% acryloid resin, and 3% Calco nigrosine base. This ink was found to have a suitable viscosity (13.8 to 14.0 x10$^{-3}$Pa.s. at 80°C), smearing resistance comparable to the aforementioned stearic acid ink, and cracking resistance which was both better than that ink, and better than IBM photocopy (IBM Series III copier). The material compatibility of this ink was found to be very good (about the same as the aforementioned stearic acid ink) and to exhibit very good jettability. Perhaps more importantly, in an accelerated heat stability test at 120°C, the subject ink was found to last 7-14 days (based on jet performance), which is projected to provide 50-100 days of stability at 90°C, or up to 70 days in a stainless steel device. This ink was found to have a viscosity of 9.0 x10$^{-3}$Pa.s. at 100°C, to have a surface tension of 27.5 dynes cm at 80°C, and to have a melting point of about 155°F (about 68°C).

Example 6

An impulse ink jet ink was formulated using 50 parts Hydrofol 2260, 50 parts stearone, and 3 parts Calco nigrosine base. The resulting ink had a viscosity of 9.2 at 85°C and 7.5 at 95°C. The resulting ink was jettable, but was judged as exhibiting marginal solubility of the colorant in the vehicle.

Example 7

An impulse ink jet ink (sample 10C) was formulated comprising 30% Hydrofol, 1.5% Calco nigrosine base and 68.5% candelilla wax. The resulting ink was found to be jettable, and to exhibit a heat stability of greater than or equal to 23 days at 120°C, again based on jet performance.

**Claims**

1. A hot melt impulse ink jet ink, comprising:
   (a) 0.1-10 wt% coloring agent; and
   (b) a vehicle for carrying said coloring agent in said ink, comprising:
     (i) 30-100 wt% of $C_{20-24}$ acid(s);
     (ii) 0-30 wt% of $C_{14}$-$C_{19}$ acid(s) or alcohol(s);
     (iii) 0-50 wt% of ketone(s) having melting point(s) of 65-120° C, or 0-70 wt% of wax(es) having a melting point of at least 65° C; and
     (iv) 0-4 wt% of plasticizer(s);
   said ink being solid at room temperature.

2. A hot melt impulse ink jet ink, comprising:
   (a) 0.1 to 10 wt% coloring agent; and
   (b) a major proportion by weight of a vehicle for carrying the coloring agent in the ink, which vehicle essentially comprises:
     (i) 30 to 100 wt% of $C_{20-24}$ acid(s), preferably aliphatic;

5

(ii) 0 to 30 wt% of $C_{14}$-$C_{19}$ acid(s) or alcohol(s), preferably aliphatic;

(iii) 0 to 50 wt% of ketone(s), preferably aliphatic, having melting point(s) of 65 to 120°C, or 0 to 70 wt% of wax(es) having a melting point of at least 65°C; and

(iv) 0 to 4 wt% of plasticizer(s);

said ink being solid at room temperature and having a viscosity of up to 1.4 x $10^{-2}$Pa.s (14 centipoises) at 80°C.

3. A hot melt ink as claimed in claim 1 or claim 2, wherein said ink contains at least 86% of said vehicle.

4. A hot melt ink as claimed in any preceding claim, wherein said coloring agent comprises 2 to 3 wt% of said ink.

5. A hot melt ink as claimed in any preceding claim, wherein said coloring agent is nigrosine base.

6. A hot melt ink as claimed in any preceding claim, wherein said $C_{20}$-$C_{24}$ acid(s) comprise 40-90 wt% of said vehicle.

7. A hot melt ink as claimed in any preceding claim, wherein said $C_{20}$-$C_{24}$ acid is behenic acid.

8. A hot melt ink as claimed in any preceding claim, wherein the weight of $C_{20}$-$C_{24}$ acid(s) is at least 1.5 to 2 times the weight of said $C_{14}$-$C_{19}$ acid(s) or alcohol(s).

9. A hot melt ink of claim 1, wherein said ketone(s) or said wax(es) comprises 5-25 wt% of said vehicle.

10. A hot melt ink as claimed in any preceding claim, wherein said plasticizer is an acrylic resin.

11. A hot melt ink as claimed in claim 1 or claim 2, wherein said vehicle comprises 20-25 wt% $C_{20}$-$C_{24}$ acid(s); 5-15 wt% $C_{14}$-$C_{19}$ acid(s); and 65-70 wt% candelilla wax.

12. A method of ink jet printing comprising:

(a) heating an ink defined in any preceding claim to at least 80°C;

(b) discharging droplets of said ink at said temperature from an impulse ink jet towards a print substrate; and

(c) allowing said ink to solidify upon impact with said substrate to form print thereon.

**Revendications**

1. Encre d'impression par jet, à fusion à chaud, pour opération pulsée, comprenant :

(a) 0,1 à 10 % en poids d'agent colorant, et

(b) un véhicule pour supporter ledit agent colorant dans ladite encre, comprenant:

(i) 30 à 100 % en poids d'acide(s) $C_{20-24}$,

(ii) 0 à 30 % en poids d'acide(s) ou d'alcool(s) $C_{14}$-$C_{19}$,

(iii) 0 à 50 % en poids de cétone(s) à point(s) de fusion de 65 à 120°C, ou 0 à 70 % en poids de cire(s) ayant un point de fusion de 65°C au moins, et

(iv) 0 à 4 % en poids de plastifiant(s),

ladite encre étant solide à la température ambiante.

2. Encre d'impresion par jet, à fusion à chaud, pour opération pulsée, comprenant :

(a) 0,1 à 10 % en poids d'agent colorant, et

(b) une proportion majeure en poids d'un véhicule pour supporter ledit agent colorant dans l'encre, ledit véhicule comprenant essentiellement:

(i) 30 à 100 % en poids d'acide(s) $C_{20-24}$, de préférence aliphatique(s),

(ii) 0 à 30 % en poids d'acide(s) ou d'alcool(s) $C_{14}$-$C_{19}$, de préférence aliphatique(s),

(iii) 0 à 50 % en poids de cétone(s), de préférence aliphatique(s), ayant un (des) point(s) de fusion de 65 à 120°C, ou 0 à 70 % en poids de cire(s) ayant un point de fusion de 65°C au moins, et

(iv) 0 à 4 % en poids de plastifiant(s),

ladite encre étant solide à la température ambiante et ayant une viscosité allant jusqu'à 1,4 x

$10^{-2pa.s}$(14 centipoises) à 80° C.

3. Encre à fusion à chaud selon la revendication 1 ou 2, dans laquelle ladite encre contient 86 % au moins dudit véhicule.

4. Encre à fusion à chaud selon l'une quelconque des précédentes revendications, dans laquelle ledit agent colorant comprend 2 à 3 % en poids de ladite encre.

5. Encre à fusion à chaud selon l'une quelconque des précédentes revendications, dans laquelle ledit agent colorant est à base de nigrosine.

6. Encre à fusion à chaud selon l'une quelconque des précédentes revendications, dans laquelle ledit ou lesdits acides $C_{20}$-$C_{24}$ comprennent 40 à 90 % en poids dudit véhicule.

7. Encre à fusion à chaud selon l'une quelconque des précédentes revendications, dans laquelle ledit acide $C_{20-24}$ est de l'acide béhénique.

8. Encre à fusion à chaud selon l'une quelconque des précédentes revendications, dans laquelle le poids d'acide(s) $C_{20}$-$C_{24}$ est égal à 1,5 à 2 fois le poids dudit ou desdits acide(s) ou alcool(s) $C_{14}$-$C_{19}$

9. Encre à fusion à chaud selon la revendication 1, dans laquelle le ou lesdits cétone(s) ou le ou lesdites cire(s) comprennent 5 à 25 % en poids dudit véhicule.

10. Encre à fusion à chaud selon l'une quelconque des précédentes revendications, dans laquelle ledit plastifiant est une résine acrylique.

11. Encre à fusion à chaud selon la revendication 1 ou 2, dans laquelle ledit véhicule comprend 20 à 25 % en poids d'acide(s) $C_{20}$-$C_{24}$, 5 à 15 % en poids d'acide(s) $C_{14}$-$C_{19}$ et 65 à 70 % en poids de cire candelilla.

12. Procédé d'impression par jet d'encre comprenant:
    (a) le chauffage d'une encre telle que définie dans l'une quelconque des précédentes revendications à 80° C au moins,
    (b) la projection de gouttelettes de ladite encre à ladite température par un jet d'encre à opération pulsée en direction d'un support d'impression, et
    (c) la solidification de ladite encre après impact sur ledit support pour former une impression sur celui-ci.

**Patentansprüche**

1. Heißschmelzimpulstintenstrahltinte, die
    (a) 0,1 - 10 Gew.% Färbemittel und
    (b) einen Träger zum Halten des Färbemittels in der Tinte enthält, welcher
        (i) 30 - 100 Gew.% $C_{20}$- bis $C_{24}$-Säure(n),
        (ii) 0 - 30 Gew.% $C_{14}$- bis $C_{19}$-Säure(n) oder Alkohol(e),
        (iii) 0 - 50 Gew.% Keton(e) mit einem Schmelzpunkt von 65 - 120° C oder 0 - 70 Gew.% Wachs-
        (e) mit einem Schmelzpunkt von mindestens 65° C und
        (iv) 0 - 4 Gew.% Weichmacher
    enthält, wobei die Tinte bei Raumtemperatur fest ist.

2. Heißschmelzimpulstintenstrahltinte, die
    (a) 0,1 - 10 Gew.% Färbemittel und
    (b) einen überwiegenden Gewichtsanteil eines Trägers zum Halten des Färbemittels in der Tinte, enthält wobei der Träger im wesentlichen
        (i) 30 - 100 Gew.% $C_{20}$- bis $C_{24}$-Säure(n), vorzugsweise aliphatisch,
        (ii) 0 - 30 Gew.% $C_{14}$- bis $C_{19}$-Säure(n) oder Alkohol(e), vorzugsweise aliphatisch,
        (iii) 0 - 50 Gew.% Keton(e), vorzugsweise aliphatisch, mit einem Schmelzpunkt von 65 - 120° C oder 0 - 70 Gew.% Wachs(e) mit einem Schmelzpunkt von mindestens 65° C und

7

(iv) 0 - 4 Gew.% Weichmacher
enthält und wobei die Tinte bei Raumtemperatur fest ist und eine Viskosität von bis zu $1,4 \times 10^{-2}$ Pa.s (14 Centipoise) bei 80 °C aufweist.

3. Heißschmelztinte nach Anspruch 1 oder 2, die mindestens 86% des Trägers enthält.

4. Heißschmelztinte nach einem der vorangehenden Ansprüche, in der das Färbemittel 2 - 3 Gew.% der Tinte ausmacht.

5. Heißschmelztinte nach einem der vorangehenden Ansprüche, in der das Färbemittel Nigrosinbase ist.

6. Heißschmelztinte nach einem der vorangehenden Ansprüche, in der die $C_{20}$- bis $C_{24}$-Säure(n) 40 bis 90 Gew.% des Trägers ausmacht (ausmachen).

7. Heißschmelztinte nach einem der vorangehenden Ansprüche, in der die $C_{20}$- bis $C_{24}$-Säure Behensäure ist.

8. Heißschmelztinte nach einem der vorangehenden Ansprüche, in der das Gewicht der $C_{20}$- bis $C_{24}$-Säure(n) mindestens das 1,5 bis 2fache des Gewichtes der $C_{14}$- bis $C_{19}$-Säure(n) oder des $C_{14}$- bis $C_{19}$-Alkohols (der $C_{14}$- bis $C_{19}$-Alkohole) ist.

9. Heißschmelztinte nach Anspruch 1, in der das Keton (die Ketone) oder das Wachs (die Wachse) 5 bis 25 Gew.% des Trägers ausmacht (ausmachen).

10. Heißschmelztinte nach einem der vorangehenden Ansprüche, in der der Weichmacher ein Acrylharz ist.

11. Heißschmelztinte nach Anspruch 1 oder 2, in der das Bindemittel 20 bis 25 Gew.% $C_{20}$- bis $C_{24}$-Säure(n), 5 bis 15 Gew.% $C_{14}$-bis $C_{19}$-Säure(n) und 65 bis 70 Gew.% Candelillawachs enthält.

12. Verfahren zum Tintenstrahldrucken, bei dem man
(a) eine Tinte nach einem der vorangehenden Ansprüche auf mindestens 80 °C erwärmt,
(b) Tröpfchen der Tinte bei dieser Temperatur aus einer Impulstintendüse auf ein Drucksubstrat schießt und
(c) die Tinte nach dem Auftreffen auf das Substrat sich verfestigen läßt, um darauf ein Druckbild zu erzeugen.